(19) Europäisches Patentamt / European Patent Office / Office européen des brevets

(11) **EP 4 636 116 A1**

(12) **EUROPEAN PATENT APPLICATION**
published in accordance with Art. 153(4) EPC

(43) Date of publication:
**22.10.2025 Bulletin 2025/43**

(21) Application number: 23903825.0

(22) Date of filing: **28.11.2023**

(51) International Patent Classification (IPC):
*C22C 38/38* $^{(2006.01)}$  *C22C 38/06* $^{(2006.01)}$
*C22C 38/22* $^{(2006.01)}$  *C22C 38/26* $^{(2006.01)}$
*C22C 38/28* $^{(2006.01)}$  *C21D 8/02* $^{(2006.01)}$
*C21D 9/46* $^{(2006.01)}$  *C23C 2/06* $^{(2006.01)}$

(52) Cooperative Patent Classification (CPC):
**C21D 8/02; C21D 9/46; C22C 38/06; C22C 38/22;
C22C 38/26; C22C 38/28; C22C 38/38; C23C 2/06**

(86) International application number:
**PCT/KR2023/019344**

(87) International publication number:
**WO 2024/128622 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2022 KR 20220173878**

(71) Applicant: POSCO Co., Ltd
**Pohang-si, Gyeongsangbuk-do 37859 (KR)**

(72) Inventors:
• **KOO, Min-Seo**
  **Gwangyang-si, Jeollanam-do 57807 (KR)**
• **HYUN, Cheol-Seung**
  **Gwangyang-si, Jeollanam-do 57807 (KR)**

(74) Representative: **Meissner Bolte Partnerschaft
mbB**
**Patentanwälte Rechtsanwälte**
**Postfach 86 06 24**
**81633 München (DE)**

(54) **COLD ROLLED STEEL SHEET HAVING EXCELLENT STRENGTH AND FORMABILITY AND METHOD OF MANUFACTURING SAME**

(57)    The present invention relates to a cold rolled steel sheet having excellent strength and formability and a method of manufacturing same and, specifically, to a cold rolled steel sheet having excellent strength and formability and a method of manufacturing same, wherein the cold rolled steel sheet can be preferably applied to structural members, such as car body members, seat rails, and pillars.

[FIG. 1]

FIG. 1

## Description

Technical Field

The present disclosure relates to a cold rolled steel sheet having excellent strength and formability, and a method of manufacturing the same, and more specifically, to a cold rolled steel sheet having excellent strength and formability that may be preferably applied to structural members such as members of a car body, seat rails, and pillars, and a method of manufacturing the same.

Background Art

Recently, due to strengthening of safety regulations for vehicle passengers and pedestrians, installation of safety devices has become mandatory, and there may be a problem that weight of a vehicle body increases, which is the opposite of a decrease in weight for improving fuel efficiency of a vehicle. Consumers are increasingly interested in hybrid vehicles or electric vehicles that may be environmentally friendly and have high fuel efficiency, and in order to produce such environmentally friendly and safe vehicles, a decrease in weight of a vehicle body structure and stability of a vehicle body material should be secured.

However, unlike conventional gasoline engines, eco-friendly vehicles are adding various devices such as electric motors, batteries, secondary fuel storage tanks, or the like, and weight of a vehicle body is increasing, as driver convenience facilities are continuously added. Accordingly, in order to realize a decrease in weight of a vehicle body, it is essential to develop materials having excellent strength, ductility, hole expandability, bending characteristics, or the like, while having a reduced thickness by securing ultra-high strength. To solve the problems, it is necessary to develop cold rolled steel sheets with an ultra-high strength of 1180 MPa or more, and excellent hole expandability and bendability.

Meanwhile, as collision safety regulations of vehicles have recently been expanded, ultra-high strength steel with excellent yield strength is being used for structural members such as members, seat rails, pillars, or the like to improve the impact resistance of the vehicle body.

As yield strength relative to tensile strength in a structural member, i.e., a yield ratio (yield strength/tensile strength) increases, there are more advantageous for absorbing impact energy. However, since strength of a steel sheet generally increases, elongation decreases, resulting in a problem of reduced formability, and therefore, there is a need to develop a material that simultaneously improves hole expandability and bending characteristics, which may be important properties in processing components, as well as a high yield ratio and high formability.

A representative manufacturing method for increasing yield strength is to use water cooling during continuous annealing. For example, in an annealing process, by performing crack treatment, immersing in water, and then performing tempering, a steel sheet of which a microstructure is transformed from martensite to tempered martensite may be manufactured.

A representative prior art document of the aforementioned method may be Patent Document 1. Patent Document 1 is a technology for manufacturing a steel material having a volume ratio of martensite of 80 to 97% and the remainder ferrite by continuously annealing a steel material having 0.18 to 0.3% carbon, water cooling the same to room temperature, and then performing an overaging treatment at a temperature of 120 to 300°C for 1 to 15 minutes. In this manner, when ultra-high strength steel is manufactured by a tempering method after water cooling, a yield ratio may be very high, but the problem occurs that shape quality of a coil deteriorates due to a temperature deviation in width and length directions. As a result, problems such as material defects, workability deterioration, or the like depending on a site may occur during roll forming processing.

As a prior art document related to improving workability of the high-strength steel sheet, there is Patent Document 2. Patent Document 2 relates to a steel sheet comprised of a composite structure mainly formed of tempered martensite, and is characterized by dispersing fine precipitated Cu particles with a particle size of 1 to 100 nm in a structure to improve workability. However, Patent Document 2 has a problem that red-hot embrittlement caused by Cu may occur by adding an excessive amount of Cu to 2 to 5% in order to precipitate good fine Cu particles, and also that manufacturing costs increase excessively.

Therefore, there is a demand for development of a steel material having an ultra-high strength of 1180 MPa or more and a high yield ratio that may be cold formed without cracking even in a 180° full compression bending test to solve the above-mentioned problems.

(Patent Document 1) Japanese Registered Patent No. 2528387
(Patent Document 2) Japanese Patent Publication No. 2005-264176

Summary of Invention

Technical Problem

An aspect of the present disclosure is to provide a cold rolled steel sheet having excellent strength and formability and a method for manufacturing the same.

The problems of the present disclosure are not limited to the above-described contents. Anyone with common knowledge in the technical field to which the present disclosure belongs will have no difficulty in understanding the additional problem of the present disclosure from the contents throughout the specification of the present disclosure.

Solution to Problem

An aspect of the present disclosure provides a cold rolled steel sheet including, by weight:

C: 0.10 to 0.20%, Si: 0.05 to 0.5%, Al: 0.01 to 0.18%, Mn: 2.4 to 3.5%, Cr: 0.05 to 0.8%, Mo: 0.05 to 0.4%, B: 0.0001 to 0.003%, Nb: 0.005 to 0.07%, Ti: 0.005 to 0.07%, with a remainder Fe and inevitable impurities, wherein, at a position 5 $\mu$m from a surface in a thickness direction, an average number per unit area of an MC and M(C,N)-based precipitates having a circle equivalent diameter of less than 100 nm (excluding 0 nm) is $10^5$ to $10^7/m^2$, where M is at least one element selected from the group consisting of Nb, Ti, Si, Cr, Mo, and Fe.

In addition, another aspect of the present disclosure provides a method for manufacturing of a cold rolled steel sheet including:

heating a slab including, by weight, C: 0.10 to 0.20%, Si: 0.05 to 0.5%, Al: 0.01 to 0.18%, Mn: 2.4 to 3.5%, Cr: 0.05 to 0.8%, Mo: 0.05 to 0.4%, B: 0.0001 to 0.003%, Nb: 0.005 to 0.07%, Ti: 0.005 to 0.07%, with a remainder Fe and inevitable impurities,
finish-rolling the heated slab to have a finish-rolling exit temperature of $A_3$+50°C to $A_3$+160°C, to obtain a hot rolled steel sheet;
coiling the hot rolled steel sheet at 600 to 700°C;
cold rolling the coiled hot rolled steel sheet to obtain a cold rolled steel sheet;
continuously annealing the cold rolled steel sheet so that a dew point temperature satisfies -35 to +20°C in a continuous annealing temperature (SS) range of $A_3$ to 900°C;
first-cooling the continuous-annealed cold rolled steel sheet to a first-cooling end temperature (SCS) of 550 to 650°C at an average cooling rate of less than 7°C/s (excluding 0°C/s);
second-cooling the first-cooled cold rolled steel sheet to a second-cooling end temperature (RCS) of 400 to 450°C at an average cooling rate of 8°C/s or more;
third-cooling the second-cooled cold rolled steel sheet to a third-cooling end temperature (TCS) of 300 to 380°C at an average cooling rate of less than 8°C/s (excluding 0°C/s); and
maintaining the third-cooled cold rolled steel sheet at a maintenance temperature (RHS), equal to the third-cooling end temperature (TCS), or reheating the third-cooled cold rolled steel sheet at a reheating temperature range (RHS), higher than the third-cooling end temperature (TCS) and within a range of 300 to 500°C.

Advantageous Effects of Invention

According to an aspect of the present disclosure, a cold rolled steel sheet having excellent strength and formability, and a method of manufacturing the same may be provided.

Various advantages and effects of the present disclosure are not limited to the above-described contents, and can be more easily understood in the process of explaining specific embodiments of the present disclosure.

Brief Description of Drawings

FIG. 1 illustrates a photograph of a cross-sectional specimen of a cold rolled steel sheet obtained from Inventive Example 1, taken with a scanning electron microscope (SEM).
FIG. 2 illustrates a photograph of a cross-sectional specimen of a cold rolled steel sheet obtained from Comparative Example 1, taken with a scanning electron microscope (SEM).

Best Mode for Invention

Hereinafter, preferred embodiments of the present disclosure will be described. However, embodiments of the present disclosure may be modified in various other forms, and the scope of the present disclosure is not limited to embodiments described below. In addition, embodiments of the present disclosure may be provided to more completely explain the present disclosure to a person having average knowledge in the relevant technical field.

In addition, the terms used in the present specification may be for describing specific examples, and may not be intended to limit the present disclosure. For example, the singular forms used in the present specification also include plural forms unless the relevant definition clearly indicates a meaning contrary thereto. In addition, the meaning of "including" used in the specification specifies the configuration and does not exclude the presence or addition of other configurations.

Hereinafter, a cold rolled steel sheet according to an embodiment of the present disclosure will be described. First, an alloy composition of the present disclosure will be described. An amount of an alloy composition described below is in wt%.

C: 0.10 to 0.20%

Carbon (C) may be a very important element added for solid solution strengthening. In addition, C contributes to improvement of strength by combining with precipitation strengthening elements to form fine carbides. When an amount of C is less than 0.10%, it is very difficult to secure the desired strength. On the other hand, when an amount of C exceeds 0.20%, strength increases rapidly due to excessive formation of martensite during cooling due to an increase in hardenability, which may result in poor bending workability. In addition, weldability deteriorates, increasing possibility of welding defects occurring during component processing by the customer. Therefore, it is preferable that an amount of C is in a range of 0.10 to 0.20%. Meanwhile, in terms of further improving the aforementioned effects, a lower limit of the amount of C may be 0.11% or 0.12%, or an upper limit of the amount of C may be 0.19% or 0.18%.

Si: 0.05 to 0.5%

Silicon (Si) not only contributes to increasing strength, but also suppresses formation of carbides, such that carbon may not be formed as carbides during annealing crack treatment and cooling, but may be distributed and accumulated in residual austenite, thereby allowing the residual austenite to exist in the austenite phase at room temperature, making it an element advantageous for securing elongation. When an amount of Si is less than 0.05%, it is difficult to sufficiently secure the above-described effect. On the other hand, when an amount of Si exceeds 0.5%, it is impossible to prevent deterioration of weld-zone properties due to formation of LME cracks, and surface defects such as red scale or the like may be induced, which deteriorates surface characteristics and plating properties of the steel material. Meanwhile, in terms of further improving the above-described effects, a lower limit of the amount of Si may be 0.10% or 0.15%, or an upper limit of the amount of Si may be 0.49% or 0.45%.

Al: 0.01 to 0.18%

Aluminum (Al) may not be only an element included for deoxidation of a steel material, but also an element that may be effective in stabilizing residual austenite by suppressing precipitation of cementite. When an amount of Al is less than 0.01%, it is difficult to sufficiently secure the above-described effect. On the other hand, when an amount of Al exceeds 0.18%, castability of the steel material may be impaired. Meanwhile, in terms of further improving the above-described effects, a lower limit of the amount of Al may be 0.02% or 0.03%, or an upper limit of the amount of Al may be 0.17% or 0.16%.

Mn: 2.4 to 3.5%

Manganese (Mn) may be an element added to secure strength. When an amount of Mn is less than 2.4%, it becomes difficult to secure strength. On the other hand, when an amount of Mn exceeds 3.5%, a bainite transformation speed becomes slow, and excessive fresh martensite may be formed, making it difficult to obtain high hole expandability. In addition, a band structure may be formed due to segregation of Mn, which impairs material uniformity and formability of the material. Meanwhile, in terms of further improving the aforementioned effects, a lower limit of the amount of Mn may be 2.5% or 2.6%, or an upper limit of the amount of Mn may be 3.4% or 3.2%.

<u>Cr: 0.05 to 0.8%</u>

Chromium (Cr) may be an element added to secure strength and hardenability. When Mn is added alone, a very large amount of Mn should be added exceeding an amount range of Mn of the present disclosure in order to secure strength and hardenability. This problem may be solved by adding Cr of 0.05% or more. On the other hand, when an amount of Cr exceeds 0.8%, local corrosion resistance deteriorates and oxides may be formed on a surface, thereby damaging phosphate treatment properties. On the other hand, in terms of further improving the aforementioned effects, a lower limit of the amount of Cr may be 0.06% or 0.07%, or an upper limit of the amount of Cr may be 0.7% or 0.6%.

<u>Mo: 0.05 to 0.4%</u>

Molybdenum (Mo) may be an element added to secure strength and hardenability. When Mn is added alone, a very large amount of Mn should be added exceeding an amount range of Mn of the present disclosure, but this problem may be solved by adding Mo of 0.05% or more. On the other hand, when an amount of Mo exceeds 0.4%, phase transformation may be suppressed, making it difficult to obtain a bainite structure, and economic feasibility of the steel sheet deteriorates as it is an expensive element. On the other hand, in terms of further improving the aforementioned effects, a lower limit of the amount of Mo may be 0.06% or 0.07%, or an upper limit of the amount of Mo may be 0.35% or 0.3%.

<u>B: 0.0001 to 0.003%</u>

Boron (B) may be an element added to secure hardenability. When Mn is added alone, a very large amount of Mn should be added exceeding an amount range of Mn of the present disclosure, but this problem may be solved by adding B of 0.0001% or more. On the other hand, when an amount of B exceeds 0.0030%, excessive B may be accumulated on a surface, thereby damaging plating adhesion. On the other hand, in terms of further improving the aforementioned effects, a lower limit of the amount of B may be 0.0002% or 0.0003%, or an upper limit of the amount of B may be 0.0025% or 0.0023%.

<u>Nb: 0.005 to 0.07%</u>

Neobium (Nb) may be an element added to secure strength and refine a microstructure. When an amount of Nb is less than 0.005%, it is difficult to obtain effects of improving strength and refining the microstructure. On the other hand, when an amount of Nb exceeds 0.07%, recrystallization may be delayed due to local grain fixation, thereby damaging uniformity of the microstructure. Meanwhile, in terms of further improving the aforementioned effects, a lower limit of the amount of Nb may be 0.010% or 0.015%, or an upper limit of the amount of Nb may be 0.06% or 0.05%.

<u>Ti: 0.005 to 0.07%</u>

Titanium (Ti) may be an element added to secure strength and refine a microstructure. When an amount of Ti is less than 0.005%, it is difficult to obtain effects of improving strength and refining the microstructure. On the other hand, when an amount of Ti exceeds 0.07%, castability may be impaired due to excessive TiN formation, and recrystallization may be delayed due to local grain fixation, thereby damaging uniformity of the microstructure. Meanwhile, in terms of further improving the aforementioned effects, a lower limit of the amount of Ti may be 0.010% or 0.015%, or an upper limit of the amount of Ti may be 0.06% or 0.05%.

The remaining component of the present disclosure may be iron (Fe). However, since unintended impurities may inevitably be mixed in from raw materials or the surrounding environment during the normal manufacturing process, this may not be ruled out. Since these impurities may be known to anyone skilled in the normal manufacturing process, not all amounts thereof may be specifically mentioned in the present specification.

Meanwhile, although not particularly limited, according to an embodiment of the present disclosure, impurities may include at least one of P, S, Sb, N, Mg, Sn, Sb, Zn, and Pb as tramp elements, and the total may be 0.1 wt% or less. The tramp elements may be impurity elements derived from scrap, etc. used as raw materials in a steelmaking process, and when the total exceeds 0.1 wt%, it may cause surface cracks in the slab and deteriorate surface quality of the steel sheet.

Although not particularly limited, according to an embodiment of the present disclosure, the cold rolled steel sheet may include, as a microstructure, by area, fresh martensite (hereinafter also referred to as 'FM'): 1 to 10%, at least one selected from the group consisting of tempered martensite (hereinafter also referred to as 'TM') and bainite (hereinafter also referred to as 'B'): 80 to 98%, retained austenite (hereinafter also referred to as 'RA'): less than 2% (including 0%), and ferrite (hereinafter also referred to as 'F'): 5% or less (including 0%). When a fraction of FM is less than 1% or a fraction of at least one selected from the group consisting of TM and B is less than 80%, it is difficult to secure strength targeted by the present disclosure. On the other hand, when a fraction of FM is exceeds 10%, or when a fraction of at least one selected from the group consisting of TM and B exceeds 98%, elongation and bending properties may deteriorate. In addition, when a fraction of F exceeds 5%, it is difficult to secure strength targeted by the present disclosure.

According to an embodiment of the present disclosure, in the cold rolled steel sheet, an average number per unit area ($D_5$) of an MC and M(C,N)-based precipitate having a circle equivalent diameter of less than 100 nm (excluding 0 nm) (or 1 nm or more and 99 nm or less) at a position 5 μm from a surface in a thickness direction may be $10^5$ to $10^7$/m$^2$. When the average number per unit area ($D_5$) is less than $10^5$/m$^2$ or exceeds $10^7$/m$^2$, hole expandability and bending workability may be inferior. In this case, M is at least one element selected from the group consisting of Nb, Ti, Si, Cr, Mo, and Fe. In the present specification, the precipitate means an MC and M(C,N)-based precipitate, and M may be a single precipitate including only one element selected from the group consisting of Nb, Ti, Si, Cr, Mo, and Fe, or a composite precipitate including two or more elements selected from the group consisting of Nb, Ti, Si, Cr, Mo, and Fe.

Meanwhile, the above-mentioned method of measuring the average number per unit area ($D_5$) may be measured by a conventional method known in the relevant technical field, and the measuring method is not particularly limited. For example, the average number per unit area ($D_5$) may be measured by polishing and etching a cross-section within a range of 5 μm in the thickness direction from the surface of the steel sheet, taking five fields of view for a cross-sectional specimen of a corrosion surface obtained after such etching at 5,000x magnification using a transmission electron microscope (TEM), to count the number of precipitates satisfying the aforementioned circle equivalent diameter, and calculating an average value thereof.

Although not particularly limited, according to an embodiment of the present disclosure, in the cold rolled steel sheet, an average number per unit area ($D_{70}$) of an MC and M(C,N)-based precipitate having a circle equivalent diameter of less than 100 nm (excluding 0 nm) (or 1 nm or more and 99 nm or less) at a position 70 μm from a surface in a thickness direction may be $10^9$ to $10^{12}$/m$^2$. When the average number per unit area ($D_{70}$) is less than $10^9$/m$^2$, a problem of poor delayed fracture characteristics may occur. On the other hand, when the average number per unit area ($D_{70}$) exceeds $10^{12}$/m$^2$, a problem of poor hole expandability may occur.

Meanwhile, the above-mentioned method of measuring the average number per unit area ($D_{70}$) may be measured by a conventional method known in the art, and the measuring method is not particularly limited. For example, the average number per unit area ($D_{70}$) may be measured by polishing and etching a cross-section within a range of 70 μm in the thickness direction from the surface of the steel sheet, taking five fields of view for a cross-sectional specimen of a corrosion surface obtained after such etching at 5,000x magnification using a transmission electron microscope (TEM), to count the number of precipitates satisfying the aforementioned circle equivalent diameter, and calculating an average value thereof.

Although not particularly limited, according to an embodiment of the present disclosure, in the cold rolled steel sheet, a ratio ($W_{C5}/W_{C70}$) of an average C amount ($W_{C5}$) at a position 5 μm from the surface of the steel sheet in the thickness direction relative to an average C amount ($W_{C70}$) at a position 70 μm from the surface in the thickness direction may be 0.2 to 0.8. To secure hydrogen embrittlement resistance by utilizing stress relaxation near the steel sheet surface layer through dew point control in the continuous annealing process, a ratio ($W_{C5}/W_{C70}$) of an average C amount ($W_{C5}$) at a position 5 μm from the surface of the steel sheet in the thickness direction relative to an average C amount ($W_{C70}$) at a position 70 μm from the surface of the steel sheet in the thickness direction may be within the range. In particular, when the ratio ($W_{C5}/W_{C70}$) is less than 0.2, a problem of poor hydrogen embrittlement resistance may occur. On the other hand, when the ratio ($W_{C5}/W_{C70}$) exceeds 0.8, a problem of poor strength may occur due to excessive decarburization.

Meanwhile, the above-mentioned ratio ($W_{C5}/W_{C70}$) measurement method may be measured by a conventional method known in the relevant technical field, and the measurement method is not particularly limited. For example, when measuring the above-mentioned ratio ($W_{C5}/W_{C70}$), to exclude influence of oxides, etching may be performed up to 5 nm in the thickness direction from the surface of the steel sheet, and then a cross-sectional specimen cut in the thickness direction (meaning a direction, perpendicular to the rolling direction) of the cold rolled steel sheet may be obtained. Then, for the cross-sectional specimen, a C amount for each of five areas corresponding to 70 μm in the thickness direction from the surface may be measured using GDS, and then the average value ($W_{C70}$) thereof may be obtained. Similarly, for the cross-sectional specimen, the C amount for each of five areas corresponding to 5 μm in the thickness direction from the surface may be measured, and then the average value ($W_{C5}$) thereof may be obtained. The ratio ($W_{C5}/W_{C70}$) may be obtained from the above-mentioned method.

Although not particularly limited, according to an embodiment of the present disclosure, a plating layer provided on at least one surface of the cold rolled steel sheet may be included.

Hereinafter, a method for manufacturing a cold rolled steel sheet according to another embodiment of the present disclosure will be described.

First, a slab satisfying the above-described alloy composition may be heated. In the present disclosure, a heating temperature of the slab is not particularly limited, but, for example, heating of the slab may be performed at 1100 to 1300°C. When the heating temperature of the slab is less than 1100°C, there may be disadvantages such as a rolling load during rough rolling. In addition, when the heating temperature of the slab exceeds 1300°C, a microstructure may become coarser and there may be disadvantages such as an increase in power consumption. A lower limit of the heating temperature of the slab is preferably 1125°C, and more preferably 1150°C. An upper limit of the heating temperature of the slab is preferably 1275°C, and more preferably 1250°C. Meanwhile, the slab may have a thickness of 230 to 270 mm.

Thereafter, the heated slab may be finish-rolled such that a finish-rolling exit temperature (hereinafter referred to as 'FDT') becomes $A_3$+50°C to $A_3$+160°C, to obtain a hot rolled steel sheet. When the finish-rolling exit temperature is less than $A_3$+50°C, hot deformation resistance may be likely to increase rapidly. When the finish-rolling exit temperature exceeds $A_3$+160°C, not only an excessively thick oxide scale may be generated, but also the microstructure of the steel sheet may be likely to coarsen. Therefore, the finish-rolling exit temperature may be $A_3$+50°C to $A_3$+160°C. A lower limit of the finish-rolling exit temperature is preferably $A_3$+60°C, and more preferably $A_3$+70°C. An upper limit of the finish-rolling exit temperature is preferably $A_3$+150°C, and more preferably $A_3$+140°C. Meanwhile, the $A_3$ temperature may be obtained through the following Equation 1.

$$A_3 = 910\text{-}203 \times C^{1/2} + 44.7 \times Si + 31.5 \times Mo \text{ - } 30 \times Mn \text{ - } 11 \times Cr + 400 \times Al + 400 \times Ti \qquad \text{[Equation 1]}$$

Thereafter, the hot rolled steel sheet may be coiled at 600 to 700°C. When a coiling temperature (hereinafter referred to as "CT") is less than 600°C, martensite or bainite may be excessively generated to cause an excessive strength increase of the hot rolled steel sheet, which may cause problems such as shape defects or the like due to load during cold rolling. On the other hand, when it exceeds 700°C, a surface scale may increase, which may deteriorate a pickling property. Therefore, it is preferable that the coiling temperature may be in a range of 600 to 700°C.

Meanwhile, in terms of further improving the aforementioned effects, a lower limit of the coiling temperature may be 633°C, and an upper limit of the coiling temperature may be 658°C.

Meanwhile, according to an embodiment of the present disclosure, a cooling process after the coiling is not particularly limited, but, for example, the coiled hot rolled steel sheet may be cooled to room temperature at a cooling rate of 0.1°C/s or less (excluding 0°C/s).

Thereafter, the coiled hot rolled steel sheet may be cold rolled to obtain a cold rolled steel sheet. The present disclosure does not particularly limit a reduction ratio during the cold rolling, but, for example, the cold rolling may be performed at a reduction ratio of 20% or more (or, 20% or more and 70% or less; i.e., in a range of 20 to 70%). When the reduction ratio of the cold rolling is less than 20%, recrystallization driving force may be weakened, which may cause problems in obtaining good recrystallized grains, and there may be a disadvantage in that shape correction is very difficult. On the other hand, when it exceeds 70%, there may be high possibility that cracks will occur at an edge of the steel sheet, and the rolling load may increase rapidly. Therefore, it is preferable that the cold rolling may be performed at a rolling reduction of 20% or more. Meanwhile, before the cold rolling, pickling may be performed to remove scale or impurities attached to the surface.

Next, the cold rolled steel sheet may be continuous-annealed at a continuous annealing temperature (hereinafter referred to as 'SS') of $A_3$ to 900°C. The continuous annealing may be performed to heat the steel sheet to an austenite single-phase region to form austenite close to 100%, such that it may be used for subsequent phase transformation. When the continuous annealing temperature is lower than $A_3$, sufficient recrystallization and austenite transformation may not occur, and thus martensite and bainite fractions desired by the present disclosure may not be secured after the annealing. On the other hand, when the continuous annealing temperature exceeds 900°C, productivity may decrease, coarse austenite may be formed, which may deteriorate the material, and surface quality such as peeling or the like of a plating material may deteriorate.

According to an embodiment of the present disclosure, in terms of further improving the aforementioned effects, a lower limit of the continuous annealing temperature (SS) may be 830°C, or an upper limit of the continuous annealing temperature (SS) may be 840°C.

In addition, when the cold rolled steel sheet is annealed in a continuous annealing temperature range of $A_3$ to 900°C (hereinafter also referred to as 'SS'), a dew point temperature may be controlled to a range of -35 to +20°C, thereby relieving stress of the steel sheet surface layer, thereby ensuring hydrogen embrittlement resistance.

According to an embodiment of the present disclosure, in terms of further improving the aforementioned effects, a lower limit of the dew point temperature in the continuous annealing temperature range may be -20°C, or an upper limit of the dew point temperature in the continuous annealing temperature range may be +10°C.

In the present disclosure, an atmosphere during the continuous annealing is not particularly limited, but, for example, the continuous annealing may be performed in a gas atmosphere comprised of nitrogen: 95% or more (including 100%), by volume, and the remainder hydrogen. When a fraction of nitrogen is less than 95%, and when a fraction of hydrogen is not increased accordingly, an oxidizing atmosphere may be formed in a furnace, which may cause oxides to be formed on the surface of the steel sheet, thereby deteriorating surface quality. In addition, when the ratio of hydrogen increases, difficulties in the process, such as explosion prevention, may be aggravated. Meanwhile, an upper limit of the fraction of nitrogen in the atmosphere during the continuous annealing is not particularly limited.

Thereafter, the continuous-annealed cold rolled steel sheet may be first-cooled to a first-cooling end temperature (SCS) of 550 to 650°C at an average cooling rate of less than 7°C/s (excluding 0°C/s). The first-cooling end temperature (SCS) may be defined as a point in time when a rapid cooling facility not applied in the first-cooling is additionally applied and the second-cooling (rapid cooling) is initiated. In the present disclosure, by dividing the cooling process into first and second stages and executing them step by step, temperature distribution of the steel sheet in a slow cooling stage may be made uniform, thereby reducing a final temperature and material deviation, and obtaining a required phase. When the first-cooling end temperature exceeds 650°C, a cooling amount until a second-cooling end temperature becomes large, which may result in poor steel sheet shape and lower bainite fraction, as compared to a level to be targeted. Meanwhile, to secure the desired properties, the first-cooling is preferably controlled to a cooling rate of less than 7°C/s, and a lower limit of the first-cooling end temperature is preferably 550°C. When an average cooling rate in the first-cooling is 7°C/s or more, the cooling amount in the second-cooling may become large, which may result in problems such as increased final temperature deviation and material deviation. Meanwhile, a lower limit of the average cooling rate in the first-cooling described above is not particularly limited.

According to an embodiment of the present disclosure, to further improve the aforementioned effects, a lower limit of the first-cooling end temperature (SCS) may be 560°C, or an upper limit of the first-cooling end temperature (SCS) may be 600°C.

According to an embodiment of the present disclosure, to further improve the aforementioned effects, a lower limit of the average cooling rate during the first-cooling may be 1.0°C/s, or an upper limit of the average cooling rate during the first-cooling may be 6.9°C/s.

Thereafter, the first-cooled cold rolled steel sheet may be secondarily cooled to a second-cooling end temperature (RCS) of 400 to 450°C at an average cooling rate of 8°C/s or higher (or 8°C/s or higher and 20°C/s or lower; i.e., 8 to 20°C/s). The second-cooling end temperature may be such that the steel sheet is cooled rapidly at a cooling rate of 8°C/s or higher before cooling below an Ms temperature to suppress introduction of a bainite phase during cooling, and to suppress shape defects due to a rapid cooling rate and a martensite transformation, thereby cooling to as high as possible directly above Ms. When the second-cooling end temperature is less than 400°C, the shape becomes poor due to a rapid temperature difference and a martensite transformation. On the other hand, when it exceeds 450°C, the problem may occur that target strength may not be secured because sufficient martensite transformation may not be introduced during the third-cooling. When the second-cooling rate is less than 8°C/s, even when the second-cooling end temperature to be targeted is reached, a high-temperature phase transformation may occur during cooling, making it impossible to obtain a martensite fraction and high strength to be targeted.

Meanwhile, according to an embodiment of the present disclosure, an upper limit of the average cooling rate during the second-cooling is not particularly limited, and may be 20°C/s as an example. In addition, in terms of further improving the aforementioned effects, an upper limit of the average cooling rate during the second-cooling may be 15°C/s.

According to an embodiment of the present disclosure, the second-cooling may additionally apply a rapid cooling facility not applied in the first-cooling. The present disclosure may not specifically limit a type of the rapid cooling facility, but as a preferred example, a hydrogen rapid cooling facility may be used. More specifically, the hydrogen rapid cooling facility may be a gas atmosphere comprised of 50 to 80% hydrogen, by volume, and the remainder nitrogen. When a fraction of the hydrogen exceeds 80%, there may be a disadvantage that management such as explosion control or the like of the facility becomes difficult, and when it is less than 50%, there may be a disadvantage that it becomes difficult to utilize efficient heat transfer characteristics of hydrogen, which may be a light element.

After that, the second-cooled cold rolled steel sheet may be third-cooled at an average cooling rate of less than 8°C/s (excluding 0°C/s) to a third-cooling end temperature (TCS) of 300 to 380°C. The steel sheet may be made to be below the Ms temperature such that martensite transformation occurs during cooling, and this martensite ultimately becomes a tempered martensite phase through reheating, which may be a post-process. Since Ms temperatures of 1180MPa-grade ultra-high-strength steel sheets may be mostly 400°C or lower, the third-cooling end temperature may be controlled to a range of 300 to 380°C in the present disclosure. When the third-cooling end temperature is less than 300°C, a martensite transformation amount may be too much, to increase strength, have insufficient elongation, have excessively high yield strength, and deteriorate formability. On the other hand, when the third-cooling end temperature exceeds 380°C, sufficient martensite transformation may not occur, so it is difficult to secure strength to be targeted. Meanwhile, when an average cooling rate during the third-cooling may be 8°C/s or more, shape defects may occur due to rapid phase transformation having Ms or lower.

Meanwhile, according to an embodiment of the present disclosure, in terms of further improving the aforementioned effects, a lower limit of the average cooling rate during the third-cooling may be 1.0°C/s, or an upper limit of the average cooling rate during the third-cooling may be 7.9°C/s.

In addition, according to an embodiment of the present disclosure, the third-cooling may be performed such that Ms-TCS (°C) satisfies a range of 30 to 60°C. By satisfying this, a martensite phase that may secure strength to be targeted may be secured, and shape quality may be secured by suppressing rapid transformation.

Meanwhile, the Ms temperature may be obtained through Equation 2 below.

[Equation 2]

$$Ms = 539 - 423 \times [C] - 30.4 \times [Mn] - 7.5 \times [Si] + 30 \times [Al]$$

(In Equation 2 above, [C], [Mn], [Si], and [Al] represent amounts, in wt%, of elements in parentheses, respectively.)

In addition, according to an embodiment of the present disclosure, the reheating may be performed such that RHS-TCS (°C) satisfies a range of 10 to 150 °C. By satisfying this, strength to be targeted may be secured while suppressing the disadvantages of hole expandability and bending workability.

Thereafter, the third-cooled cold rolled steel sheet may be maintained at a maintenance temperature (RHS), equal to the third-cooling end temperature (TCS), or reheated at a reheating temperature range (RHS), higher than the third-cooling end temperature (TCS), and may be within a range of 300 to 500 °C.

Through the maintenance or reheating process, interphase carbon distribution necessary for stabilizing retained austenite and additional bainite phase transformation may be obtained. In the present disclosure, a maintenance temperature of a maintenance section or a reheating temperature, which may be an end point temperature of the reheating section, may be conveniently referred to as 'RHS.' When the above-mentioned maintenance temperature or reheating temperature is less than 300°C, martensite generated during the first-cooling may not be tempered, so strength becomes excessively high and elongation becomes poor. On the other hand, when the above-mentioned maintenance temperature or reheating temperature exceeds 500°C, excessive tempering or bainite transformation may occurs during the reheating, so it is difficult to secure strength to be targeted.

In addition, according to an embodiment of the present disclosure, the above-mentioned maintenance or reheating may be performed such that RHS-TCS (°C) satisfies the range of 10 to 150°C. By satisfying this, strength to be targeted may be secured while suppressing disadvantages of hole expandability and bending workability.

Meanwhile, in the present disclosure, after the above-mentioned reheating, hot-dipping the cold rolled steel sheet in a plating bath of 430 to 490°C may be additionally included. The present disclosure does not specifically limit a type of hot-dipping, but for example, the hot-dipping may be hot-dip galvanizing. In addition, in the present disclosure, the cold rolled steel sheet may be directly hot-dipped after the reheating, or may be cooled to room temperature and then reheated to hot-dipped.

In addition, the present disclosure may additionally include temper-rolling the cold rolled steel sheet at a reduction ratio of less than 2% (excluding 0%) after the hot-dipping. The temper-rolling may be for correcting a shape of the steel sheet and adjusting yield strength. The temper-rolling may be performed after cooling to room temperature after the hot-dipping.

Mode for Invention

Hereinafter, the present disclosure will be described in more detail through examples. However, it should be noted that the following examples may be only intended to explain the present disclosure through examples, and may not be intended to limit the scope of the rights of the present disclosure. This may be because the scope of the rights of the present disclosure may be determined by the matters described in the patent claims and matters reasonably inferred therefrom.

(Example)

After preparing molten steel having an alloy composition described in Table 1 below, continuous casting was performed to manufacture a slab having a thickness of 250 mm. The slab was heated to 1200°C for 12 hours, and then hot rolled and coiled under the conditions described in Table 2 below to obtain a hot rolled steel sheet having a thickness of 3.0 mm, and then pickled and cold rolled at a cold reduction ratio of 50% to obtain a cold rolled steel sheet having a thickness of 1.5 mm. Thereafter, the cold rolled steel sheet was subjected to continuous annealing, first-cooling, second-cooling, third-cooling, and reheating under conditions described in Tables 2 and 3 below, and then hot-dipping was performed. In this case, gas used in the continuous annealing was 95 vol% N-5 vol% H, and gas used in the second-cooling was 75 vol% H-25 vol% N. A microstructure, precipitates, and mechanical properties of the cold rolled steel sheets manufactured in this manner were measured, and results were illustrated in Tables 4 and 5 below.

A fraction of the microstructure was measured using electron backscatter diffraction (EBSD) and XRD. Regarding $(D_5)$ and $(D_{70})$ related to the precipitates and $(W_{C5}/W_{C70})$ related to a surface layer C amount ratio, samples were manufactured using a replica method in the same manner as described above, and were observed using a transmission electron microscope (TEM). Meanwhile, in the present disclosure, since it is difficult to distinguish between TM and B, so they may be expressed as a sum of fractions thereof.

Tensile strength (TS), yield strength (YS), a yield ratio (YR), total elongation (T-EL), and uniform elongation (U-EL) were measured through a tensile test in a horizontal rolling direction, and test specimen regulations having 50 mm in gauge length and 15 mm in width were used. Hole expandability (HER) was measured according to ISO 16330 standard, and holes were sheared with a 10 mm diameter punch at a clearance of 12%.

In addition, to evaluate hydrogen embrittlement resistance, a 30 mm wide and 110 mm long test specimen was taken from the steel sheet in a width direction, parallel to the rolling direction, bent 90° at a bending radius of 7 mm, fastened with bolts as much as spring back was, immersed in hydrochloric acid at pH 3, and examined for crack occurrence after 96 hours. In this example, in the hydrogen embrittlement resistance column of Table 5, when no cracks occurred, it was judged to have excellent hydrogen embrittlement resistance, and was judged as 'O', and when cracks occurred, it was judged as 'X.'

In addition, to evaluate weldability, welding was performed under conditions having a force of 4.5KN, a welding time of 170ms, and a holding time of 250ms. A welding current range was defined as a lower limit current satisfying 4√t (t=thickness) and an upper limit current minus 0.2kA from a welding current at which expulsion occurred. A welding current range of 1.5kA or more was judged as 'good,' and a current range of less than 1.5kA was judged as 'bad.'

[Table 1]

| Steel No. | Alloy Composition (wt%) (Remainder Fe & Other Impurities) | | | | | | | | |
|---|---|---|---|---|---|---|---|---|---|
| | C | Si | Mn | Al | Nb | Ti | B | Cr | Mo |
| Inventive Steel 1 | 0.16 | 0.48 | 2.75 | 0.05 | 0.035 | 0.020 | 0.0010 | 0.30 | 0.20 |
| Inventive Steel 2 | 0.15 | 0.40 | 2.80 | 0.08 | 0.031 | 0.020 | 0.0010 | 0.20 | 0.20 |
| Inventive Steel 3 | 0.14 | 0.35 | 2.90 | 0.05 | 0.035 | 0.024 | 0.0012 | 0.25 | 0.21 |
| Inventive Steel 4 | 0.15 | 0.49 | 2.75 | 0.06 | 0.036 | 0.016 | 0.0015 | 0.35 | 0.18 |
| Inventive Steel 5 | 0.13 | 0.45 | 2.95 | 0.04 | 0.035 | 0.025 | 0.0008 | 0.40 | 0.19 |
| Comparative Steel 1 | <u>0.08</u> | 0.40 | 2.50 | 0.05 | 0.015 | 0.020 | 0.0010 | 0.25 | 0.19 |
| Comparative Steel 2 | <u>0.21</u> | 0.40 | 3.00 | 0.03 | 0.030 | 0.020 | 0.0010 | 0.20 | 0.20 |
| Comparative Steel 3 | 0.19 | <u>0.01</u> | 3.30 | 0.05 | 0.041 | 0.030 | 0.0010 | 0.20 | 0.20 |
| Comparative Steel 4 | 0.11 | 0.41 | 2.91 | 0.07 | 0.035 | 0.023 | 0.0020 | <u>0.01</u> | 0.15 |
| Comparative Steel 5 | 0.15 | <u>0.55</u> | 2.95 | 0.09 | 0.035 | 0.020 | 0.0010 | 0.21 | 0.20 |

[Table 2]

| Example | Steel No. | A$_3$ [°C] | Ms [°C] | FDT [°C] | CT [°C] | SS [°C] | Average Cooling Rate [°C/s] in 1$^{st}$ Cooling |
|---|---|---|---|---|---|---|---|
| Inventive Ex. 1 | Inventive Steel 1 | 799 | 386 | 921 | 633 | 840 | 5.8 |
| Inventive Ex. 2 | Inventive Steel 2 | 809 | 390 | 919 | 648 | 830 | 5.6 |
| Inventive Ex. 3 | Inventive Steel 3 | 796 | 390 | 914 | 635 | 840 | 5.8 |
| Inventive Ex. 4 | Inventive Steel 4 | 803 | 390 | 912 | 638 | 835 | 5.7 |
| Inventive Ex. 5 | Inventive Steel 5 | 796 | 392 | 925 | 658 | 840 | 5.8 |
| Comparative Ex. 1 | Comparative Steel 1 | 827 | 428 | 911 | 639 | 835 | 5.7 |
| Comparative Ex. 2 | Comparative Steel 2 | 769 | 357 | 872 | 641 | 820 | 5.4 |
| Comparative Ex. 3 | Comparative Steel 3 | 759 | 360 | 879 | 658 | 840 | 5.8 |
| Comparative Ex. 4 | Comparative Steel 4 | 816 | 403 | 915 | 640 | 825 | 5.5 |
| Comparative Ex. 5 | Comparative Steel 5 | 815 | 384 | 910 | 635 | 825 | 5.5 |
| Comparative Ex. 6 | Inventive Steel 2 | 809 | 390 | 919 | 648 | 830 | 7.2 |

[Table 3]

| Example | Dew Point Temp. [°C] in Continuous Annealing | SCS [°C] | 2nd Cooling Rate [°C/s] | RCS [°C] | 3rd Cooling Rate [°C/s] | TCS [°C] | Ms-TCS [°C] | RHS [°C] | RHS-TCS [°C] | Hot-Dip Galvanizing Plating Bath Temp. [°C] |
|---|---|---|---|---|---|---|---|---|---|---|
| Inventive Ex. 1 | 10 | 580 | 10 | 400 | 7.7 | 340 | 46 | 460 | 120 | 460 |
| Inventive Ex. 2 | -20 | 580 | 9. 4 | 410 | 7.8 | 340 | 50 | 460 | 120 | 462 |
| Inventive Ex. 3 | 0 | 580 | 12 | 400 | 7.9 | 340 | 50 | 460 | 120 | 459 |
| Inventive Ex. 4 | 5 | 580 | 11.3 | 410 | 7.7 | 360 | 30 | 460 | 100 | 460 |
| Inventive Ex. 5 | -15 | 580 | 8 | 400 | 6.2 | 340 | 52 | 460 | 120 | 455 |
| Comparative Ex. 1 | <u>-38</u> | 580 | 10 | 400 | 7.7 | 340 | 88 | 460 | 120 | 462 |
| Comparative Ex. 2 | <u>-40</u> | 580 | 9.4 | 410 | 9 | 340 | 17 | 460 | 120 | 465 |
| Comparative Ex. 3 | <u>-39</u> | 580 | 12 | 400 | 9.2 | 320 | 40 | 460 | 140 | 460 |
| Comparative Ex. 4 | <u>-40</u> | 580 | 11.3 | 410 | 7.7 | 340 | 63 | 460 | 120 | 461 |
| Comparative Ex. 5 | <u>-37</u> | 580 | 8 | 400 | 6.2 | 340 | 44 | 460 | 120 | 460 |
| Comparative Ex. 6 | <u>-40</u> | 580 | 9.4 | 410 | 9 | 340 | 50 | 460 | 120 | 460 |

[Table 4]

| Example | Microstructure Fraction [area%] | | | | Surface Layer C Amount Ratio | Average Number per Unit Area [EA/m$^2$] of Precipitates | |
|---|---|---|---|---|---|---|---|
| | TM+B | FM | RA | F | $(W_{C5}/W_{C70})$ | $(D_5)$ | $(D_{70})$ |
| Inventive Ex. 1 | 89.1 | 9.4 | 1.5 | 0 | 0.25 | $1.6 \times 10^5$ | $3.9 \times 10^{10}$ |
| Inventive Ex. 2 | 88.8 | 9.1 | 1.6 | 0.5 | 0.37 | $2.9 \times 10^6$ | $1.7 \times 10^{11}$ |
| Inventive Ex. 3 | 89.7 | 6.3 | 0.8 | 3.2 | 0.28 | $3.7 \times 10^6$ | $3.1 \times 10^{11}$ |
| Inventive Ex. 4 | 88.5 | 5.9 | 1.2 | 4.4 | 0.22 | $4.3 \times 10^6$ | $6.2 \times 10^{10}$ |
| Inventive Ex. 5 | 87.7 | 7.1 | 1.3 | 3.9 | 0.31 | $3.2 \times 10^6$ | $2.5 \times 10^{10}$ |
| Comparative Ex. 1 | 82.5 | 1.2 | 4.3 | 12 | 0.84 | $6.8 \times 10^{10}$ | $4.2 \times 10^{10}$ |
| Comparative Ex. 2 | 80.8 | 14 | 5.2 | 0 | 0.81 | $8.6 \times 10^{11}$ | $2.7 \times 10^{11}$ |
| Comparative Ex. 3 | 75.8 | 18 | 0.9 | 5.3 | 0.82 | $5.7 \times 10^{10}$ | $5.1 \times 10^{11}$ |
| Comparative Ex. 4 | 84.9 | 1.5 | 4.1 | 9.5 | 0.83 | $9.2 \times 10^{10}$ | $6.6 \times 10^{10}$ |
| Comparative Ex. 5 | 88.6 | 5.6 | 5.8 | 0 | 0.82 | $8.9 \times 10^{10}$ | $3.5 \times 10^{10}$ |
| Comparative Ex. 6 | 88.8 | 9.1 | 1.6 | 0.5 | 0.85 | $5.2 \times 10^{10}$ | $4.5 \times 10^{10}$ |

[Table 5]

| Example | YS [MPa] | TS [MPa] | YR | T-EL [%] | U-EL [%] | HER [%)] | Hydrogen Embrittlement Resistance | Weldability |
|---|---|---|---|---|---|---|---|---|
| Inventive Ex. 1 | 988 | 1275 | 0.77 | 10 | 7.2 | 41 | ○ | Good |
| Inventive Ex. 2 | 967 | 1256 | 0.77 | 9.8 | 7.1 | 37 | ○ | Good |
| Inventive Ex. 3 | 1062 | 1271 | 0.84 | 10.6 | 8.3 | 51 | ○ | Good |
| Inventive Ex. 4 | 885 | 1255 | 0.71 | 10.1 | 8.7 | 40 | ○ | Good |
| Inventive Ex. 5 | 1061 | 1290 | 0.82 | 11.2 | 8.9 | 29 | ○ | Good |
| Comparative Ex. 1 | 998 | 991 | 1.01 | 12 | 9.2 | 60 | X | Good |
| Comparative Ex. 2 | 983 | 1468 | 0.67 | 4.6 | 2 | 11 | X | Bad |
| Comparative Ex. 3 | 1279 | 1510 | 0.85 | 4.5 | 2.1 | 9 | X | Bad |
| Comparative Ex. 4 | 960 | 1165 | 0.82 | 11.3 | 9.1 | 13 | X | Good |
| Comparative Ex. 5 | 916 | 1299 | 0.71 | 10.9 | 7 | 17 | X | Bad |
| Comparative Ex. 6 | 953 | 1273 | 0.75 | 8.6 | 7.2 | 31 | X | Bad |

As can be seen from the Tables 1 to 5, in Inventive Examples 1 to 5 that satisfy the alloy composition and manufacturing conditions proposed by the present disclosure, it can be confirmed that the microstructure, precipitates, and mechanical properties that the present disclosure seeks to obtain are secured.

On the other hand, in Comparative Examples that do not satisfy the alloy composition or manufacturing conditions proposed by the present disclosure, it can be confirmed that at least one feature among the microstructure, precipitates, and mechanical properties that the present disclosure seeks to obtain are not secured.

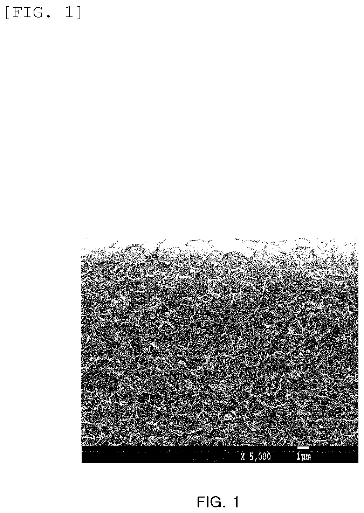

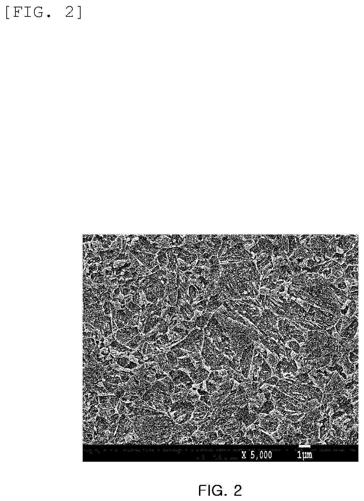

Meanwhile, FIG. 1 illustrates a microstructure photograph of Inventive Example 1 observed with an SEM, and FIG. 2 illustrates a microstructure photograph of Comparative Example 1 observed with an SEM.

**Claims**

1.   A cold rolled steel sheet comprising, by weight:

C: 0.10 to 0.20%, Si: 0.05 to 0.5%, Al: 0.01 to 0.18%, Mn: 2.4 to 3.5%, Cr: 0.05 to 0.8%, Mo: 0.05 to 0.4%, B: 0.0001 to 0.003%, Nb: 0.005 to 0.07%, Ti: 0.005 to 0.07%, with a remainder Fe and inevitable impurities, wherein, at a position 5 $\mu$m from a surface in a thickness direction, an average number per unit area of an MC and M(C,N)-based precipitate having a circle equivalent diameter of less than 100 nm (excluding 0 nm) is $10^5$ to $10^7/m^2$, where M is at least one element selected from the group consisting of Nb, Ti, Si, Cr, Mo, and Fe.

2.   The cold rolled steel sheet of claim 1, comprising, by area, fresh martensite: 1 to 10%, at least one selected from the group consisting of tempered martensite and bainite: 80 to 98%, retained austenite: less than 2% (including 0%), and ferrite: 5% or less (including 0%), as a microstructure.

3.   The cold rolled steel sheet of claim 1, wherein, at a position 70 $\mu$m from the surface in the thickness direction, an average number per unit area of an MC and M(C,N)-based precipitate having a circle equivalent diameter of less than 100 nm (excluding 0 nm) is $10^9$ to $10^{12}/m^2$.

4.   The cold rolled steel sheet of claim 1, wherein a ratio ($W_{C5}/W_{C70}$) of an average C amount ($W_{C5}$) at a position 5 $\mu$m from the surface in the thickness direction relative to an average C amount ($W_{C70}$) at a position 70 $\mu$m from the surface in the thickness direction is 0.2 to 0.8.

5.   The cold rolled steel sheet of claim 1, wherein the including a plating layer provided on at least one surface of the cold rolled steel sheet.

6.   A method of manufacturing a cold rolled steel sheet comprising:

heating a slab including, by weight, C: 0.10 to 0.20%, Si: 0.05 to 0.5%, Al: 0.01 to 0.18%, Mn: 2.4 to 3.5%, Cr: 0.05 to 0.8%, Mo: 0.05 to 0.4%, B: 0.0001 to 0.003%, Nb: 0.005 to 0.07%, Ti: 0.005 to 0.07%, with a remainder Fe and inevitable impurities,

finish-rolling the heated slab to have a finish-rolling exit temperature of $A_3+50°C$ to $A_3+160°C$, to obtain a hot rolled steel sheet;

coiling the hot rolled steel sheet at 600 to 700°C;

cold rolling the coiled hot rolled steel sheet to obtain a cold rolled steel sheet;

continuously annealing the cold rolled steel sheet such that a dew point temperature satisfies -35 to +20°C in a continuous annealing temperature range of $A_3$ to 900°C;

first-cooling the continuous-annealed cold rolled steel sheet to a first-cooling end temperature of 550 to 650°C at an average cooling rate of less than 7°C/s (excluding 0°C/s);

second-cooling the first-cooled cold rolled steel sheet to a second-cooling end temperature of 400 to 450°C at an average cooling rate of 8°C/s or more;

third-cooling the second-cooled cold rolled steel sheet to a third-cooling end temperature of 300 to 380°C at an average cooling rate of less than 8°C/s (excluding 0°C/s); and

maintaining the third-cooled cold rolled steel sheet at a maintenance temperature, equal to the third-cooling end temperature, or reheating the third-cooled cold rolled steel sheet at a reheating temperature range, higher than the third-cooling end temperature and within a range of 300 to 500°C.

7. The method of claim 6, wherein the heating a slab is performed at 1100 to 1300°C.

8. The method of claim 6, wherein the cold rolling is performed at a reduction ratio of 20 to 70%.

9. The method of claim 6, wherein the continuous annealing is performed in a gas atmosphere consisting of 95% or more (including 100%) of nitrogen and the remainder hydrogen, by volume.

10. The method of claim 6, wherein the second-cooling is performed in a hydrogen quenching facility in a gas atmosphere consisting of 50 to 80% of hydrogen and the remainder nitrogen, by volume.

11. The method of claim 6, further comprising hot-dipping the cold rolled steel sheet in a plating bath at 430 to 490°C after the maintaining or reheating.

12. The method of claim 11, further comprising temper-rolling the cold rolled steel sheet at a reduction ratio of less than 2% (excluding 0%) after the hot-dipping.

[FIG. 1]

FIG. 1

[FIG. 2]

FIG. 2

## INTERNATIONAL SEARCH REPORT

| International application No. |
|---|
| **PCT/KR2023/019344** |

**A.    CLASSIFICATION OF SUBJECT MATTER**

**C22C 38/38**(2006.01)i; **C22C 38/06**(2006.01)i; **C22C 38/22**(2006.01)i; **C22C 38/26**(2006.01)i; **C22C 38/28**(2006.01)i; **C21D 8/02**(2006.01)i; **C21D 9/46**(2006.01)i; **C23C 2/06**(2006.01)i

According to International Patent Classification (IPC) or to both national classification and IPC

**B.    FIELDS SEARCHED**

Minimum documentation searched (classification system followed by classification symbols)

C22C 38/38(2006.01); C21D 8/02(2006.01); C21D 9/46(2006.01); C22C 38/00(2006.01); C22C 38/04(2006.01); C22C 38/28(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 냉연강판(cold rolled steel sheet), 시트레일(seat rail), 필라(pillar), 인장강도 (tensile strength), 항복비(yield ratio), 석출물(precipitate), 연속소둔(continuous annealing), 이슬점 온도(dew point), 프레시 마르텐사이트(fresh martensite), 템퍼드 마르텐사이트(tempered martensite)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2276741 B1 (POSCO) 13 July 2021 (2021-07-13)<br>See paragraphs [0116] and [0123] and claims 1-3, 5, 7-9, 11 and 13. | 1-12 |
| Y | KR 10-2020-0075991 A (POSCO) 29 June 2020 (2020-06-29)<br>See claim 7 and table 2. | 1-12 |
| A | KR 10-2014-0083286 A (HYUNDAI STEEL COMPANY) 04 July 2014 (2014-07-04)<br>See claims 1-5. | 1-12 |
| A | KR 10-2433938 B1 (JFE STEEL CORPORATION) 19 August 2022 (2022-08-19)<br>See claims 1-5. | 1-12 |
| A | US 2018-0044751 A1 (JFE STEEL CORPORATION) 15 February 2018 (2018-02-15)<br>See claims 4 and 6. | 1-12 |

☑ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 February 2024** | **04 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/019344** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0086202 A (POSCO CO., LTD.) 23 June 2022 (2022-06-23)<br>    See claims 7-11. | 1-12 |

Form PCT/ISA/210 (second sheet) (July 2022)

## INTERNATIONAL SEARCH REPORT
### Information on patent family members

International application No.

**PCT/KR2023/019344**

| Patent document cited in search report | | | Publication date (day/month/year) | Patent family member(s) | | | Publication date (day/month/year) |
|---|---|---|---|---|---|---|---|
| KR | 10-2276741 | B1 | 13 July 2021 | CN | 112752862 | A | 04 May 2021 |
| | | | | CN | 112752862 | B | 06 May 2022 |
| | | | | EP | 3859041 | A1 | 04 August 2021 |
| | | | | JP | 2022-501510 | A | 06 January 2022 |
| | | | | JP | 7410936 | B2 | 10 January 2024 |
| | | | | KR | 10-2020-0036759 | A | 07 April 2020 |
| | | | | US | 11753693 | B2 | 12 September 2023 |
| | | | | US | 2022-0033926 | A1 | 03 February 2022 |
| | | | | US | 2023-0340633 | A1 | 26 October 2023 |
| | | | | WO | 2020-067752 | A1 | 02 April 2020 |
| KR | 10-2020-0075991 | A | 29 June 2020 | CN | 113242912 | A | 10 August 2021 |
| | | | | EP | 3901299 | A1 | 27 October 2021 |
| | | | | JP | 2022-513964 | A | 09 February 2022 |
| | | | | JP | 2023-153941 | A | 18 October 2023 |
| | | | | KR | 10-2153197 | B1 | 08 September 2020 |
| | | | | US | 10941467 | B2 | 09 March 2021 |
| | | | | US | 2020-0190640 | A1 | 18 June 2020 |
| | | | | WO | 2020-130560 | A1 | 25 June 2020 |
| KR | 10-2014-0083286 | A | 04 July 2014 | KR | 10-1467064 | B1 | 01 December 2014 |
| KR | 10-2433938 | B1 | 19 August 2022 | CN | 111684091 | A | 18 September 2020 |
| | | | | CN | 111684091 | B | 31 December 2021 |
| | | | | EP | 3705592 | A1 | 09 September 2020 |
| | | | | JP | 6597938 | B1 | 30 October 2019 |
| | | | | MX | 2020008050 | A | 07 September 2020 |
| | | | | US | 11332804 | B2 | 17 May 2022 |
| | | | | US | 2021-0040577 | A1 | 11 February 2021 |
| | | | | WO | 2019-151017 | A1 | 08 August 2019 |
| US | 2018-0044751 | A1 | 15 February 2018 | CN | 107250406 | A | 13 October 2017 |
| | | | | CN | 107250406 | B | 15 November 2019 |
| | | | | EP | 3263727 | A1 | 03 January 2018 |
| | | | | EP | 3263727 | B1 | 15 April 2020 |
| | | | | JP | 6044741 | B1 | 14 December 2016 |
| | | | | JP | WO2016-135793 | A1 | 27 April 2017 |
| | | | | KR | 10-1986640 | B1 | 07 June 2019 |
| | | | | KR | 10-2017-0107056 | A | 22 September 2017 |
| | | | | MX | 2017010909 | A | 24 November 2017 |
| | | | | WO | 2016-135793 | A1 | 01 September 2016 |
| KR | 10-2022-0086202 | A | 23 June 2022 | KR | 10-2470747 | B1 | 25 November 2022 |

Form PCT/ISA/210 (patent family annex) (July 2022)

**REFERENCES CITED IN THE DESCRIPTION**

**Patent documents cited in the description**

- JP 2528387 B
- JP 2005264176 A